# DEMANDE DE BREVET EUROPEEN

(11) **EP 1 187 079 A1**
(43) Date de publication de la demande: **13.03.2002**
(21) Numéro de dépôt: 01402291.7
(22) Date de dépôt: 04.09.2001
(51) Int. Cl.: G07F 17/16, G06F 15/02, G07F 19/00

(54) **Système pour la distribution à distance du contenu de bibliothèques**

(30) Priorité: 06.09.2000 FR 0011355
(71) Demandeur: Phonereader, 75012 Paris (FR)
(72) Inventeur: Pastor, Jean-Philippe, 75012 Paris (FR)
(74) Mandataire: de Roquemaurel, Bruno

(57) **Abrégé**

Ce système comprend une pluralité de terminaux (10) mis à la disposition d'utilisateurs, conçus pour consulter simultanément au moins une page entière d'un livre, et une base documentaire (6) dans laquelle est stockée une pluralité de documents électroniques, cette base documentaire étant alimentée par un ensemble de fournisseurs (5) de documents électroniques, et accessible par l'intermédiaire d'un fournisseur de services (2) et d'un réseau de transmission de données numériques (1) de type radiotéléphonique, chaque terminal (10) étant équipé d'un modem (14) de transmission, adapté à ce type de réseau et faisant l'objet d'un abonnement spécifique auprès d'un opérateur (3) du réseau radiotéléphonique, l'opérateur du réseau comprenant des moyens pour déterminer le montant d'une partie des sommes versées par les utilisateurs dans le cadre de leur abonnement, à reverser au fournisseur de services (2), celui-ci comprenant des moyens pour déterminer le montant de la partie du montant reçu de l'opérateur, à reverser aux fournisseurs de documents (5).

## Description

La présente invention concerne un système pour la distribution de documents électroniques.

Elle s'applique notamment, mais non exclusivement, à la distribution de documents multimédia qui donc peuvent comprendre des informations textuelles (livre électronique), des images, des séquences sonores, ou encore des séquences audiovisuelles.

Il existe des terminaux portables de poche munis d'un écran d'affichage de relativement grande dimension pour visualiser le contenu de documents tels que des livres, les dimensions de l'écran étant choisies de manière à permettre la visualisation et la lecture de la totalité d'une ou deux pages du document.
De tels terminaux comportent à cet effet des moyens pour charger et mémoriser l'ensemble des pages d'un ou plusieurs documents, et des moyens pour se connecter à un micro-ordinateur et pour recevoir les informations contenues dans un document.
Il existe à l'heure actuelle de nombreux services accessibles par le réseau Internet, proposant de télécharger des livres électroniques que l'on peut sélectionner dans des listes de documents à télécharger, appelées bibliothèque électronique. Cette solution présente l'inconvénient de nécessiter, en plus du terminal portable, un ordinateur disposant d'une connexion au réseau Internet. Pour tenter de supprimer cet inconvénient, certains fabricants proposent des terminaux équipés d'un modem. Toutefois, cette solution ne supprime pas la nécessité de disposer d'une connexion avec le réseau Internet.

En outre, les services de téléchargement de livres impliquent une transaction de paiement en ligne, obligeant l'utilisateur à fournir des informations confidentielles concernant sa carte bancaire, avec un risque important que ces informations soient piratées et utilisées frauduleusement. Par ailleurs, le passage par un réseau sécurisé pour effectuer une telle transaction de paiement n'offre pas une sécurité totale.

En outre, en acceptant des paiements par carte bancaire, le fournisseur du service de diffusion en ligne de livres se trouve confronté à la législation de vente par correspondance qui donne au client la possibilité de contester son achat pendant un délai de plusieurs semaines après la facturation. Ceci constitue une insécurité financière pour le fournisseur du service dans la mesure où, bien que le service de téléchargement ait été fourni, il ne peut considérer que le paiement est définitivement réalisé qu'après l'expiration de ce délai.

Par ailleurs, la diffusion par le réseau Internet de livres électroniques présente certains risques à la fois pour l'auteur du livre et pour le diffuseur du livre, sachant que, même si elles sont au préalable cryptées, les informations diffusées par le réseau Internet peuvent être piratées et par exemple diffusées gratuitement sur un autre site.

La présente invention a pour but de supprimer ces inconvénients. A cet effet, elle propose un système pour la diffusion à distance de documents, comprenant une pluralité de terminaux mis à la disposition d'utilisateurs, conçus pour consulter simultanément au moins une page entière d'un livre, et une base documentaire dans laquelle est stockée une pluralité de documents électroniques, cette base documentaire étant alimentée par un ensemble de fournisseurs de documents électroniques, et accessible par l'intermédiaire d'un fournisseur de services et d'un réseau de transmission de données numériques.

Selon l'invention, ce système est caractérisé en ce que le réseau de transmission est un réseau de type radiotéléphonique, et chaque terminal est équipé d'un modem de transmission adapté à ce type de réseau et fait l'objet d'un abonnement spécifique auprès d'un opérateur du réseau radiotéléphonique, l'opérateur du réseau comprenant des moyens pour déterminer le montant d'une partie des sommes versées par les utilisateurs dans le cadre de leur abonnement, à reverser au fournisseur de services, celui-ci comprenant des moyens pour déterminer le montant de la partie du montant reçu de l'opérateur, à reverser aux fournisseurs de documents.

Grâce à ces dispositions, le fournisseur de services et les fournisseurs de documents peuvent être rémunérés par les utilisateurs pour les services rendus sans imposer aux utilisateurs de transmettre des informations confidentielles concernant leur carte bancaire.

Avantageusement, l'opérateur comprend des moyens pour déterminer le coût des communications de chaque utilisateur en fonction du volume d'informations transmises entre le fournisseur de services et l'utilisateur.

Chaque terminal comprend des moyens pour demander au fournisseur de services de fournir une partie déterminée d'un document, le fournisseur de services comprenant des moyens pour transmettre la partie d'un document, demandée par un utilisateur.
La page suivante affichée n'est donc pas nécessairement la page suivante du document en cours de consultation par l'utilisateur. En effet, cette page peut être une autre page du document ou d'un autre document avec laquelle la page précédente est liée par exemple par un lien de type hypertexte. Elle peut également provenir d'un dictionnaire ou d'un répertoire et contenir des informations concernant un mot ou groupe de mots désignés par l'utilisateur dans la page précédemment affichée.
Comme un document ne doit pas nécessairement être téléchargé en totalité sur un terminal pour pouvoir être consulté, une telle consultation selon l'invention n'est plus nécessairement linéaire, c'est-à-dire de la première page à la dernière page du document.

Un mode de réalisation du système selon l'invention sera décrit ci-après, à titre d'exemple non limitatif, avec référence aux dessins annexés dans lesquels
La figure 1 représente schématiquement un système de diffusion électronique de documents, selon l'invention ;
La figure 2 représente schématiquement un terminal mis à la disposition des utilisateurs d'un système selon l'invention.

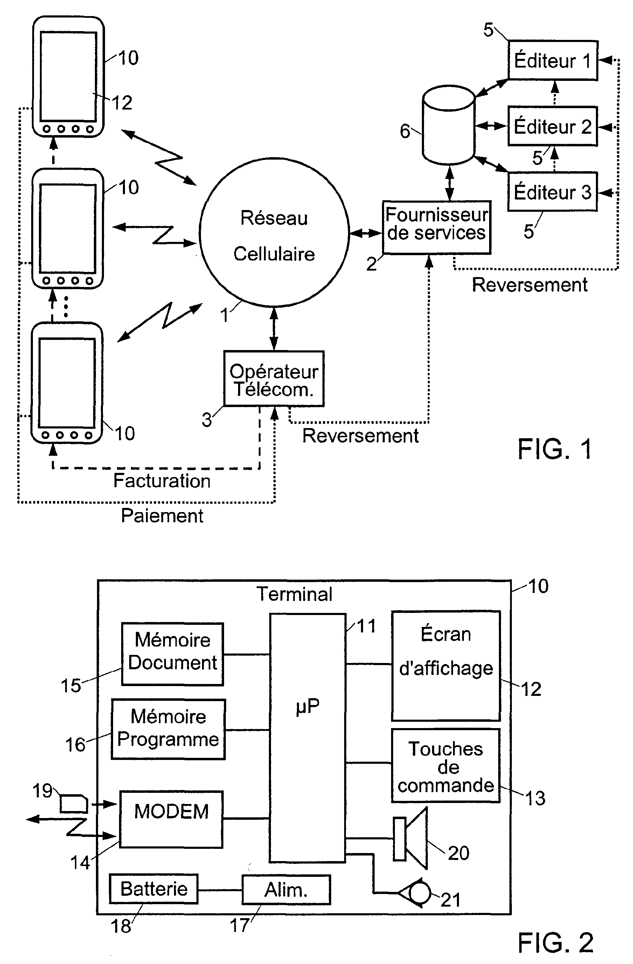

La figure 1 représente un système de diffusion électronique de documents comprenant de une pluralité de terminaux 10 communiquant via un réseau 1 de transmission de données numériques avec le système informatique 2 d'un fournisseur de services ou portail donnant accès à une ou plusieurs bibliothèques de documents électroniques.

Les terminaux 10 comportent un écran d'affichage de relativement grandes dimensions pour pouvoir visualiser avec une bonne qualité d'affichage la totalité d'une ou deux pages d'un livre simultanément, ou des images fixes ou animées.

Selon l'invention, le réseau 1 utilisé est un réseau radiotéléphonique haut débit, de deuxième génération, par exemple GPRS (General Packet Radio Service) ou de troisième génération, par exemple UMTS (Universal Mobile Telecommunications System). Outre les débits de transfert offerts, ces réseaux présentent l'avantage de fonctionner en mode paquet, dans lequel le volume des données transmises est déterminant, par opposition au mode circuit dans lequel seul le temps de connexion est déterminant. Les réseaux de deuxième et troisième génération permettent donc d'envisager une facturation par l'opérateur du réseau en fonction du volume des données transmises et non du temps de connexion.

Le fournisseur de services 2 est en relation avec une pluralité de fournisseurs de documents, par exemple des éditeurs de documents électroniques 5, qui alimentent la base documentaire 6 diffusée par le fournisseur de services 2.

Pour pouvoir accéder aux documents proposés par le fournisseur de services 2, les utilisateurs doivent souscrire à un abonnement auprès d'un opérateur de télécommunication 3. Il peut ainsi être proposé plusieurs formules d'abonnement, chaque formule d'abonnement permettant d'accéder à certaines catégories de documents et de types de services, le coût de chaque formule dépendant des catégories de documents et des services accessibles correspondants.

Le système informatique de l'opérateur 3 détermine le coût des communications de chaque utilisateur en fonction du volume d'informations transmises entre le fournisseur de services et l'utilisateur, et éventuellement en fonction du temps de connexion.

Avantageusement, les abonnements peuvent inclure un forfait attribué périodiquement, par exemple mensuellement, défini par un volume d'informations transmises et éventuellement par un temps de connexion, le coût des communications d'un utilisateur étant déterminé et facturé par l'opérateur lorsque le volume de transmissions ou le temps de connexion alloué par le forfait est consommé par l'utilisateur.

Le système informatique de l'opérateur 3 est conçu pour déterminer le montant de la partie des sommes payées par les utilisateurs à l'opérateur 3, à reverser au fournisseur de services 2. Le système informatique du fournisseur de services 2, est conçu pour déterminer le montant d'une partie de la somme que le fournisseur reçoit de l'opérateur, à répartir entre les fournisseurs de documents 5, en fonction des abonnements souscrits par les utilisateurs.

Avantageusement, les documents demandés par les utilisateurs sont transmis partiellement par le fournisseur de services, seule la partie de document transmise étant mémorisée par le terminal et ce d'une manière temporaire jusqu'à la fin de la restitution de celle-ci par le terminal. Dans le cas d'un document textuel, celui-ci est transmis page par page, c'est-à-dire que seules les pages d'un document tel qu'un livre à afficher par le terminal sont transmises au terminal et affichées, les pages suivantes n'étant transmises que lorsque l'utilisateur actionne une commande pour les afficher.

Dans le cas d'une séquence audio ou vidéo, celle-ci mémorisée et restituée par le terminal au fur et à mesure de sa transmission, de sorte qu'à la fin de la restitution de la séquence, cette dernière ne se trouve plus dans la mémoire du terminal.

Selon une particularité de l'invention, chaque utilisateur dispose d'une bibliothèque personnelle sur le calculateur du fournisseur de services 2, dans laquelle sont placés tous les documents achetés par l'utilisateur. De cette manière, l'utilisateur peut accéder librement autant de fois qu'il le souhaite aux documents qu'il a préalablement achetés soit directement, soit dans le cadre de son abonnement, sans avoir à acheter à nouveau le document. Grâce à cette disposition, les utilisateurs n'ont plus besoin de télécharger totalement les documents qu'ils ont achetés, et donc de prévoir un terminal 10 disposant d'une mémoire importante pour le stockage de documents.

Cette disposition permet également aux utilisateurs d'acheter à l'avance un document qui peut évoluer au cours du temps, et ainsi d'obtenir des informations mises à jour en permanence, ou de consulter plusieurs fois le même document avec des outils de consultation ou de lecture différents qui peuvent eux-mêmes évoluer au cours du temps.

Bien que le système selon l'invention permette d'éviter le téléchargement complet d'un document, on peut bien entendu prévoir cette fonctionnalité pour permettre à l'utilisateur de poursuivre la consultation d'un document, même s'il envisage de quitter la zone géographique couverte par le réseau radiotéléphonique.

Dans le cas d'un réseau radiotéléphonique cellulaire, chaque utilisateur du réseau doit être enregistré dans la cellule radio où il se trouve de manière à pouvoir recevoir des appels. Dans un tel réseau, chaque utilisateur est donc localisé géographiquement à une cellule près. Cette particularité du réseau de transmission est exploitée par l'invention pour proposer à chaque utilisateur qui en fait la demande une liste de documents relatifs à la région dans laquelle il est localisé, et ce sans qu'il ait à préciser cette région.

Sur la figure 2, chaque terminal 10 comprend un processeur 11, par exemple de type microprocesseur, qui est connecté à :
- des mémoires 15, 16, par exemple de type SRAM et/ou FLASH, pour sauvegarder les programmes de commande du terminal et les informations et documents reçus,
- un modem 14 conçu pour accéder au réseau 1 et activé au moyen d'une carte à puce SIM (Subscriber Identity Module) permettant d'identifier l'abonné,
- un écran d'affichage 12 pour visualiser notamment les documents reçus, et
- des touches de commande 13 de préférence en nombre limité pour accéder aux commandes principales du terminal.

Chaque terminal peut également comprendre des moyens de restitution sonore reliés à un ou plusieurs haut-parleurs 20 pour restituer des séquences sonores incluses dans les documents transmis. On peut également prévoir d'équiper le terminal d'un microphone 21, permettant d'introduire vocalement des commandes. Dans ce dernier cas, la mémoire programme 16 contient un logiciel de reconnaissance vocale.

L'ensemble des circuits du terminal est alimenté par un circuit d'alimentation 17 relié à une source d'énergie autonome, telle qu'une batterie rechargeable 18, intégrée dans le boîtier du terminal.

L'écran d'affichage 12 est prévu pour permettre de visualiser d'une manière confortable pour l'utilisateur, tout type de documents multimédia, en particulier des livres électroniques incorporant éventuellement des images fixes ou animées, des publications périodiques telles que des articles de presse, ou des séquences vidéo. Il est de préférence en couleur, à haute résolution avec un système de rétroéclairage, et tactile pour permettre à l'utilisateur d'introduire des commandes dans le terminal en désignant directement des zones particulières de l'écran à l'aide de son doigt ou d'un stylo.

Avantageusement, la mémoire programme 16 contient un logiciel de reconnaissance d'écriture permettant de reconnaître des commandes ou informations écrites manuellement à l'aide du stylet dans une zone prévue à cet effet de l'écran.

Par ailleurs, le terminal peut également être équipé de moyens de connexion pour se connecter à des cartes à mémoire enfichables dans lesquelles peuvent être stockés un ou plusieurs documents électroniques.

Le programme de consultation ou de lecture de document est avantageusement conçu pour offrir de nombreuses fonctionnalités au cours de la lecture d'un document, liées au fait que le terminal peut être connecté en permanence avec le fournisseur de services 2.
On peut par exemple prévoir un accès direct à des répertoires ou des dictionnaires pour demander en temps réel des informations sur un mot ou groupe de mots désignés à cet effet par l'utilisateur directement sur l'écran d'affichage 12. Une telle action a pour effet d'envoyer une requête au fournisseur de services qui recherche et envoie les informations demandées, lesquelles sont affichées par exemple dans une fenêtre en surimpression sur la page du document en cours de visualisation.
Les documents visualisés peuvent également inclure des liens tels que des liens hypertexte, vers d'autres pages du même document ou d'autres documents, ce qui permet à l'utilisateur de "naviguer" entre plusieurs pages.

Le fournisseur de services 2 peut également proposer des services de téléchargement de programmes de consultation ou de lecture de documents. De cette manière, l'utilisateur peut choisir le programme qui lui convient le mieux, par exemple en fonction du type de document qu'il veut consulter. Il peut également offrir toutes les fonctions intégrées au WAP (Wireless application Protocol), c'est-à-dire les fonctions de messagerie électronique, de participation à des forums électroniques, d'échange instantané de messages courts, etc.

Le fournisseur de services 2 peut encore proposer un service d'accès au réseau Internet. Dans ce cas, la mémoire programme 16 du terminal 10 contient un logiciel de navigation Internet qui peut être proposé au téléchargement par le fournisseur de services.

D'une manière classique, le terminal et les programmes de consultation ou de lecture proposent de nombreuses fonctionnalités permettant à l'utilisateur de définir le format d'affichage des documents qu'il consulte sur l'écran 12.

De préférence, toutes les transmissions entre les terminaux et le fournisseur de services sont sécurisées à l'aide d'un algorithme de cryptage, utilisant par exemple une clé publique et une clé privée.

En particulier, les documents électroniques stockés dans la base documentaire 6 sont structurés à l'aide d'un format unique, par exemple le format XML (Extensible Markup Language). Les requêtes émises par les utilisateurs contiennent de préférence la référence d'un document, et la définition d'une partie du document si le document ne doit pas être téléchargé en totalité.
Cette définition de partie de document peut consister en un mot ou une expression si la référence du document à rechercher correspond à un répertoire, un annuaire ou un dictionnaire. Cette définition peut également consister en un numéro de page ou un ensemble de numéros de pages.

A la réception de telles requêtes, le fournisseur de services accède à la base documentaire 6 pour en extraire les informations demandées par l'utilisateur. Ensuite, il applique à ces informations un traitement de cryptage, puis les insère dans un message qu'il transmet à l'utilisateur ayant émis la requête correspondante.

A la réception du message contenant les informations demandées, le terminal 10 effectue le décryptage des informations, et leur applique un traitement de conversion, pour convertir le format XML des informations reçues en un format adapté au programme de consultation ou de lecture, qui a été sélectionné au préalable par l'utilisateur.

Le terminal 10 selon l'invention peut également être utilisé pour accéder à d'autres services de commerce électronique, les achats effectués par l'utilisateur étant facturés à celui-ci par l'opérateur 3 sur la base d'informations fournies par le fournisseur de services 2.

## Revendications

1. Système pour la diffusion à distance de documents, comprenant une pluralité de terminaux (10) mis à la disposition d'utilisateurs, comprenant chacun un écran d'affichage (12) conçu pour consulter simultanément au moins une page entière d'un livre, et une base documentaire (6) dans laquelle est stockée une pluralité de documents électroniques, cette base documentaire étant alimentée par un ensemble de fournisseurs (5) de documents électroniques, et accessible par l'intermédiaire d'un fournisseur de services (2) et d'un réseau de transmission de données numériques (1),
**caractérisé en ce que** le réseau de transmission (1) est un réseau de type radiotéléphonique, et chaque terminal (10) est équipé d'un modem (14) de transmission adapté à ce type de réseau et fait l'objet d'un abonnement spécifique auprès d'un opérateur (3) du réseau radiotéléphonique, l'opérateur du réseau comprenant des moyens pour déterminer le montant d'une partie des sommes versées par les utilisateurs dans le cadre de leur abonnement, à reverser au fournisseur de services (2), celui-ci comprenant des moyens pour déterminer le montant de la partie du montant reçu de l'opérateur, à reverser aux fournisseurs de documents (5).

2. Système selon la revendication 1,
**caractérisé en ce que** l'opérateur (3) comprend des moyens pour déterminer le coût des communications de chaque terminal (10) en fonction du volume d'informations transmises entre le fournisseur de services (5) et le terminal.

3. Système selon la revendication 1 ou 2,
**caractérisé en ce que** chaque terminal (10) comprend des moyens pour demander au fournisseur de services (2) de fournir une partie déterminée d'un document, le fournisseur de services comprenant des moyens pour transmettre la partie d'un document, demandée par un utilisateur.

4. Système selon la revendication 3,
**caractérisé en ce que** seule la partie de document transmise est mémorisée par le terminal et ce d'une manière temporaire jusqu'à la fin de la restitution de celle-ci par le terminal.

5. Système selon l'une des revendications 1 à 4,
**caractérisé en ce que** chaque terminal (10) comprend des moyens pour demander au fournisseur de services (2) de fournir la totalité d'un document, le fournisseur de services (2) comprenant des moyens pour transmettre la totalité du document demandé par un terminal.

6. Système selon l'une des revendications 1 à 5,
**caractérisé en ce qu'**il comprend des moyens pour permettre à chaque utilisateur d'accéder uniquement à certaines catégories de documents et de types de services en fonction d'une formule d'abonnement qu'il a choisi parmi plusieurs formules d'abonnement proposées dont le coût dépend des catégories de documents et des services accessibles correspondants.

7. Système selon l'une des revendications 1 à 6,
**caractérisé en ce que** l'opérateur (3) comprend des moyens pour déterminer le coût des communications de chaque terminal (10) en fonction du volume d'informations transmises entre le fournisseur de services et le terminal, et éventuellement en fonction du temps de connexion du terminal au réseau (1).

8. Système selon la revendication 6 ou 7,
**caractérisé en ce que** les abonnements incluent un forfait attribué périodiquement, défini par un volume d'informations transmises et éventuellement par un temps de connexion, l'opérateur (3) comprenant des moyens pour déterminer le coût des communications de chaque terminal avec le fournisseur de services (2), lorsque le volume de transmissions ou le temps de connexion alloué par le forfait attribué au terminal (10) est consommé par celui-ci.

9. Système selon l'une des revendications 1 à 8,
**caractérisé en ce que** le fournisseur de services (2) comprend des moyens pour attribuer à chaque utilisateur une bibliothèque personnelle accessible par l'intermédiaire du réseau (1) et du fournisseur de services (2), contenant tous les documents achetés par l'utilisateur, et à laquelle l'utilisateur a accès librement sans avoir à acheter à nouveau les documents qu'elle contient.

10. Système selon l'une des revendications 1 à 9,
**caractérisé en ce que** le réseau radiotéléphonique (1) est un réseau de type cellulaire, le fournisseur de services (2) comportant des moyens pour déterminer dans quelle cellule se trouve chaque terminal (10), et pour transmettre à celui-ci une liste de documents relatifs à la région géographique dans laquelle se trouve la cellule où est situé le terminal.

11. Système selon l'une des revendications 1 à 10,
**caractérisé en ce que** l'écran d'affichage (12) de chaque terminal (10) est conçu pour visualiser d'une manière confortable pour l'utilisateur, tout type de documents, et est en couleur, à haute résolution, muni d'un système de rétroéclairage, et tactile pour permettre à l'utilisateur d'introduire des commandes dans le terminal en désignant directement des zones particulières de l'écran à l'aide de son doigt ou d'un stylo.

12. Système selon l'une des revendications 1 à 11,
**caractérisé en ce que** chaque terminal (10) comprend des moyens de restitution sonore (20) pour restituer des séquences sonores incluses dans les documents transmis, et des moyens de restitution de séquences audiovisuelles à l'aide de l'écran d'affichage 12 et des moyens de restitution sonore (20).

13. Système selon l'une des revendications 1 à 12,
**caractérisé en ce que** l'ensemble des circuits du terminal (10) est alimenté par un circuit d'alimentation (17) relié à une source d'énergie autonome (18) intégrée dans le boîtier du terminal.

14. Système selon l'une des revendications 1 à 13,
**caractérisé en ce que** le modem (14) de chaque terminal (10) comprend des moyens pour être activé par une carte à puce (19) d'identification d'un abonné.

15. Système selon l'une des revendications 1 à 14,
**caractérisé en ce que** les transmissions entre les terminaux (10) et le fournisseur de services (2) sont sécurisées à l'aide d'un algorithme de cryptage.

16. Système selon l'une des revendications 1 à 15,
**caractérisé en ce que** chaque terminal (10) comprend des moyens pour décrypter les informations fournies par le fournisseur de services, et des moyens pour convertir les informations décrypter à un format compatible avec un programme de consultation utilisé par le terminal pour afficher les informations reçues sur l'écran d'affichage (12).
